Europäisches Patentamt

European Patent Office

Office européen des brevets

(11) Veröffentlichungsnummer: **0 441 938 B1**

(12) **EUROPÄISCHE PATENTSCHRIFT**

(45) Veröffentlichungstag der Patentschrift: **21.12.94**

(51) Int. Cl.⁵: **B01D 43/00**, C11B 13/00, C02F 11/00, C02F 9/00, A23K 1/10

(21) Anmeldenummer: **90913530.3**

(22) Anmeldetag: **03.09.90**

(86) Internationale Anmeldenummer: **PCT/HU90/00063**

(87) Internationale Veröffentlichungsnummer: **WO 91/03305 (21.03.91 91/07)**

(54) **VERFAHREN UND EINRICHTUNG ZUR HERAUSGEWINNUNG VON FETT- UND/ODER EIWEISSHALTIGEM MATERIAL AUS FETTHALTIGEM FLÜSSIGEM STOFF, INSBESONDERE AUS SCHLACHTHOFSCHLAMM UND/ODER SCHLACHTOHFABWASSER.**

(30) Priorität: **05.09.89 HU 456789**

(43) Veröffentlichungstag der Anmeldung: **21.08.91 Patentblatt 91/34**

(45) Bekanntmachung des Hinweises auf die Patenterteilung: **21.12.94 Patentblatt 94/51**

(84) Benannte Vertragsstaaten: **AT BE DE DK ES FR GB IT NL SE**

(56) Entgegenhaltungen:
**EP-A- 0 034 872**
**WO-A-84/01884**
**DE-A- 2 205 312**
**GB-A- 1 564 277**

(73) Patentinhaber: **RICHTER GEDEON VEGYESZETI GYAR R.T.**
**Gyömröi ut 19-21**
**H-1103 Budapest X (HU)**

(72) Erfinder: **RUDOLF, Péter**
**Pasaréti t 109**
**H-1026 Budapest (HU)**
Erfinder: **SZABO, Béla**
**Törökbálinti t 36**
**H-1112 Budapest (HU)**
Erfinder: **JANKO, Ferenc**
**Galamb utca 9/a**
**H-9024 Györ (HU)**
Erfinder: **NESZMELYI, Erzsébet**
**Fráter György utca 29**
**H-1149 Budapest (HU)**
Erfinder: **ILLES, János**
**Olt utca 27**
**H-1112 Budapest (HU)**
Erfinder: **TAKACS, István**
**Kemence utca 8**
**H-1103 Budapest (HU)**
Erfinder: **HAVAS, Ferenc**
**Felszabadulás u. 22**
**H-9330 Kapuvár (HU)**

Erfinder: **BENDE, György**
**Gergely utca 48**
**H-1103 Budapest (HU)**


(74) Vertreter: **Bohnenberger, Johannes, Dr. et al**
**Meissner, Bolte & Partner**
**Postfach 86 06 24**
**D-81633 München (DE)**

## Beschreibung

Die Erfindung betrifft ein Verfahren sowie eine Vorrichtung zur Gewinnung von Fett und/oder eiweißhaltigem, breiigem Material aus fetthaltigem und eiweißhaltigem, flüssigem Stoff, insbesondere aus Schlachthofschlamm und/oder Schlachthofabwasser.

Bei der Fleischverarbeitung fallen im Vergleich zum Lebendgewicht der Schlachttiere in einem ziemlich großen Anteil Abfälle und Nebenprodukte an, wobei auch der spezifische Wasserverbrauch hoch ist. Darausfolgend ist auch die anfallende Menge an Industrie-(Schlachthof)-Abwasser groß, was aber von zahlreichen anderen Abwässern abweichend nicht nur Umweltschutzprobleme mit sich bringt, sondern auch einen Verlust an wertvollem Fett und Eiweiß, also an nutzbarem speziellem Schlachthofabfall mit sich bringt. Aus derartigen Abwässern kann gereinigtes Industriefett und für Fütterungszwecke geeignetes Fleischmehl gewonnen werden.

In Fleischindustriebetrieben entstehen Industrieabwässer und sonstige. Abfälle beim Schlachten der Tiere, bei der Aufarbeitung der Häute, der Entleerung der pänsen, Magen und der Gedärme, bei der Fleisch- und Fettverarbeitung sowie im Verlauf des Tiertransportes. Die charakteristischen Daten der bei den ungarischen Fleischindustriebetzieben anfallenden Abwässer sind folgende:

| | |
|---|---|
| - Industrieabwassermenge | 1000-4000 $m^3$/Tag |
| - pH | 6,5 - 8,0 |
| - KOI (chemischer Sauerstoffbedarf) | 1000-20000 $mgO_2$/$dm^3$ |
| - $CCl_4$-haltige Fette (organischer Lösemittelextrakt) | 500 - 800 mg/$dm^3$ |
| - sich absetzende Feststoffe | 1000 - 2500 mg/$dm^3$ |
| - durch das Sieb durchfallende Feststoffe | 150 - 300 mg/$dm^3$ |
| - Verteilung der durch das Sieb durchfallenden sich absetzenden Feststoffe: | |
| - eiweisshaltige Abfälle | 50 - 90 mg/$dm^3$ |
| - Faserstoffe (z.B. Stroh usw.) | 100 - 210 mg/$dm^3$ |

Zur Behandlung der in Fleischindustriebetrieben entstandenen Abwässer wurden verschiedene Technologien und Einrichtungen entwickelt. Nach einer der häufigsten angewandten Lösung wird das gesammelte Industrieabwasser über ein Durchlasssieb gefiltert und der auf dem Sieb zurückbleibende stückige Feststoff mit Abfällen anderer Herkunft vermischt und aus dem Gemisch Fleischmehl hergestellt. Das durch das Sieb durchströmende Abwasser wird in einen belüfteten Fettfänger geführt, in dem dann mit Hilfe der Luft das Fett in der Form von Tröpfchen auf die Wasseroberfläche gebracht wird. Von dort wird dann das Fett auf maschinellen Wege durch ununterbrochenes Abschöpfen entfernt und zur Verarbeitung abtransportiert.

Das zum Teil entfettete Abwasser wird in einen Reaktor geführt. Dort werden eine Kalkhydratsuspension und Eisen/II/-Sulfat zugemischt. Unter Einwirkung dieser Chemikalien und der Luft tritt im Abwasser eine Flockung ein und im Verlaufe des Mischens entstehen Flocken. Die chemische Reinigung verläuft im Reaktor auf die Weise, dass sich unter Einwirkung der Lauge die Wasser-Fettemulsion zersetzt und die als Kolloide anwesenden Fetteilchen und sonstige Schwebstoffe an den grossflächigen Fe/OH/$_3$-Flocken adsorbiert werden.

Aus dem Reaktor (Verflocker) gelangt das Abwasser in den unter Überdruck stehenden Flotator. Hier wird unter einem den atmosphärischen Druck überschreitenden Druck Luft in das Abwasser geführt und darauffolgend der Überdruck aufgehoben. Darauf steigen kleine Luftblasen zur Wasseroberfläche und reissen die Schlammvorflocken mit sich, wodurch im wesentlichen die Trennung der Schlamm- und Wasserphase erfolgt. Im Laufe der beschriebenen Vorgänge kommt es zu einer wesentlichen Verminderung des Wassergehaltes des Schlammes. Aus dem flotierten Abwasser wird der Schlamm - zwecks weiterer Entwässerung - ununterbrochen abgeleitet. Das gereinigte Abwasser wird in die Kanalisation oder in eine biologische (Lebendschlamm) Abwasserkläranlage geleitet.

Im einzelnen Anlagen wird der während der chemischen Behandlung anfallende und Chemikalien enthaltende Schlamm - zwecks Entwässerung - auf ein Pressbandfilter geführt. Der im Ergebnis der Filterung erhaltene Schlamm wird entweder kompostiert und in der Landwirtschaft weiter verwendet oder - soweit er dazu nicht geeignet ist - zwecks Vernichtung in einem Schlämmteich gesammelt. Es besteht aber - eben wegen der chemischen Behandlung - keine Möglichkeit den Schlamm als Futtermittelgrundstoff zu verwerten.

Bekannt sind auch solche dem vorstehend beschriebenen entsprechende Verfahren, bei denen als Flockungsmittel Lignon-Sulfonsäure verwendet wird. Der so behandelte Schlamm wurde zwar früher als

EP 0 441 938 B1

Futtermittelgrundstoff verwendet, die in letzter Zeit jedoch erworbenen praktischen Erfahrungen stellen die Möglichkeit der Verwendung eines derartigen Schlammes für Fütterungszwecke in Frage. Aus diesem Grunde kann der Schlamm höchstens als Kompost verwertet oder muss nach einem kostenaufwendigen Verfahren vernichtet werden.

Nach einem anderen bekannten Verfahren wird das Schlachthofabwasser mittels eines Durchlasssiebes vorgefiltert. Danach wird die flüssige Phase mit Luft flotiert. Die chemische Behandlung entfällt. Bei dieser lediglich mechanischen Behandlung gelangt das Fett voll und ganz in die Schaumphase, die auf der Oberfläche der in der Einrichtung befindlichen Flüssigkeit schwimmt. Dieser Schaum enthält neben Fett auch proteinhaltige Stoffe. Die auf der Oberfläche schwimmende Schaumphase wird mit Hilfe einer Abschöpfvorrichtung kontinuierlich aus der Anlage entfernt. Die Schaumphase kann wegen ihres erheblichen Fettgehaltes (zumindest unmittelbar) nicht als Grundstoff für Futtermittel verwendet werden, sondern wird im allgemeinen gelagert und vernichtet. Dieses Verfahren kann eigentlich nur als eine dem Umweltschutz dienende Abwasserbehandlungsmethode angesehen werden.

Zusammenfassend kann festgestellt werden, dass zur Zeit die zur Separierung der verunreinigenden Komponenten (Fett und Feststoffe heterogener Zusammensetzung) der Schlachthofabwässer dienenden Verfahren kostenaufwendig sind, die Endprodukte (Schlamm, Schaum) nicht als wertvoll angesehen werden können und durch die Notwendigkeit ihres Abtransports, ihrer Lagerung und Vernichtung die Behandlungskosten weiter erhöht werden.

Aus der GB-A 1 564 277 sind ein Verfahren und eine Vorrichtung zum Trennen von Fett und Eiweiß aus Schlachthofschlamm bekannt, bei welchen das strömende Rohmaterial durch Wasserdampfeinwirkung schnell in zwei Stufen auf bis zu 100°C erhitzt und dann mittels einer Zentrifuge getrennt wird.

Demgegenüber liegt der Erfindung die Aufgabe zugrunde, Verfahren und Vorrichtung dahingehend weiterzubilden, daß auf rationelle Weise eine Gewinnung von fett- und eiweißhaltigen Materialien aus diese enthaltendem breiigem Material, insbesondere aus Schlachthofschlamm und Schalthofabwasser durchführbar ist.

Diese Aufgabe wird durch ein Verfahren nach dem Patentanspruch 1 sowie eine Vorrichtung nach dem Patentanspruch 6 gelöst.

Wenn der zunächst auf mindestens 30°C aufgewärmte fetthaltige Schlamm unter einen, den atmosphärischen Druck überschreitenden Druck gesetzt und mit einer augenblicklichen direkten Dampfeinblasung auf eine Temperatur von mindestens 130°C erhitzt (wodurch die Körnchenbildung und Sterilisation beginnt) und darauffolgend über eine kurze Zeitdauer hindurch - bei weiterem Strömenlassen - auf dieser Temperatur gehalten wird, eine Körnchenbildung eintritt, sowie eine Sterilisation erfolgt. Wenn darauffolgend der unter Überdruck stehende heisse Schlamm auf den atmosphärischen Druck adiabatisch expandiert wird, kann das erhaltene Gut mit an sich bekannten Methoden und Apparaten z.B. durch Zentrifugieren in drei Phasen, namentlich in Wasser, Fett und eine heterogene Zusammensetzung aufweisende aber eine grosse Menge Eiweiss enthaltende feuchte Festphase getrennt werden.

Das Wasser und geringe Mengen feste Schmutzstoffe enthaltende Fett kann hiernach zu industriellem Fett hohen Reinheitsgrades weiter gereinigt und in dieser Form verwertet werden, wobei aus der eiweisshaltigen feuchten Festphase ein trockenes granuliertes Fleischmehl hergestellt werden kann, das einen wertvollen Futtermittelgrundstoff darstellt.

Aufgrund der vorgenannten Erkenntnisse wurde die gestellte Aufgabe mit Hilfe eines Verfahrens gelöst, in dessen Verlauf der flüssige Stoff einem Phasentrennarbeitsgang unterzogen wird.

Dabei wird

- der flüssige Stoff homogenisiert und auf eine Temperatur von 30-60°C erwärmt,
- der angewärmte flüssige Stoff in eine Erhitzereinheit eingeleitet, wodurch direkte Zuführung eines eine Temperatur von 130-151°C aufweisenden und unter einem überdruck von 2-4 bar stehenden Dampfes, der flüssige Stoff unter einen Überdruck von 2-4 bar gesetzt und innerhalb einer Zeitdauer von 1-2 Sekunden auf etwa 130-150°C erhitzt wird, was im flüssigen Stoff eine Kornbildung auslöst,
- der flüssige Stoff mit der erhöhten Temperatur - unter Aufrechterhaltung des überdruckes und der Temperatur - für eine Zeitdauer von 60-300 Sekunden weiter strömen gelassen,
- darauffolgend der flüssige Stoff durch Verminderung des überdruckes auf etwa 0,01 - 0,02 bar während einer Zeitdauer von 1-2 Sekunden adiabatisch expandiert,
- der expandierte flüssige Stoff in Wasser, Wasser und Feststoffverunreinigungen enthaltendes Fett sowie eiweisshaltige feuchte Festphase getrennt.

Dabei ist zu unterstreichen, dass der Ausdruck "Abwasserschlamm" weitestmöglich auszulegen ist, d.h. dass von den ganz dünnflüssigen Stoffen bis zu den dickflüssigen Schlämmen die Aufarbeitung der die verschiedensten Konsistenzen aufweisenden Schlämme und Suspensionen mit umfasst sind.

4

Vorzugsweise wird aus dem durch Flotieren auf dem Abwasserspiegel schwimmend erhaltenen Schaum ein Schlamm gebildet und dieser Schaum den weiteren Behandlungsarbeitsgängen unterzogen. Zweckmässig ist, wenn der Schaum durch eine auch die Homogenisierung ergebende Umwälzung (Zirkulation) in Schlamm umgewandelt wird.

Die Vorrichtung zur Durchführung des Verfahrens verfügt über Mittel zum Strömenlassen des flüssigen Stoffes und über einen Phasentrennapparat, wobei ein wesentliches Merkmal dieser Anlage darin besteht, dass sie zum Erwärmen des flüssigen Stoffes dienende Mittel, sowie eine zur Weiterleitung des erwärmten flüssigen Stoffes dienende Leitung besitzt, die an eine Erwärmungseinheit angeschlossen ist, in die eine Dampfleitung mündet. Aus der Erwärmungseinheit tritt eine Leitung aus, in die ein Expansionsventil eingebaut ist. An das Expansionsventil ist eine in einen Trennbehälter mündende Leitung angeschlossen. Die Anlage umfasst einen den aus dem Trennbehälter austretenden flüssigen Stoff in wässrige, Fett und feuchte Festphase trennenden Apparat. Für eine vorteilhafte Ausführungsform der Anlage ist kennzeichnend, dass sie einen Behälter zur Aufnahme und Homogenisierung des unbehandelten flüssigen Stoffes besitzt, an den mindestens eine Rezirkulationsleitung mit Pumpe und Wärmeaustauscher angeschlossen ist. Die in die Erwärmungseinheit mündende Leitung zweigt von der Rezirkulationsleitung ab. Ein Wärmetauscher ist an sie angeschlossen. Einen anderen Ausführungsbeispiel entsprechend ist die Erwärmungseinheit eine, eine Richtungsablenkung sichernde. injektorartige, im Mittelteil durch bogenförmige Flächen begrenzte, sich in Richtung der Strömung erweiternde Vorrichtung, nahe deren Eintrittsöffnung eine oder mehrere Dampfleitungen einmünden, wobei die Einmündung in der Ebene der Wandung der Erwärmungseinheit liegt. Vorteilhaft ist weiterhin, wenn das Expansionsventil aus einem starren und einem darin angeordneten elastischen Rohrglied besteht, wobei in den zwischen dem starren Rohrglied und dem elastischen Rohrglied bestehenden Raum eine Pressluftleitung mündet. Der Trennbehälter verfügt oben über einen zylindrischen und unten über einen kegeligen Teil. Aus seinem oberen Teil tritt eine Leitung zur Weiterleitung von Dampf, aus seinem unteren Teil eine Leitung zur Weiterleitung von flüssigem Stoff. Vorzugsweise ist der den aus dem Trennbehälter austretenden flüssigen Stoff in wässrige Phase, Fett und feuchte Festphase trennende Apparat eine Schneckenzentrifuge mit Selbstentleerung.

Vorteilhaft ist auch das Ausführungsbeispiel, das einen oder mehrere Separatoren zum Trennen des Wassers und der Verunreinigungen aus der Wasser und Feststoffverunreinigungen enthaltenden Fettphase besitzt. Mit mehreren Separatoren kann das Mass der Reinigung erhöht werden. Vorteilhaft kann auch die Ausführungsform der Anlage sein, die einen oder mehrere Apparate zum Erstarrenlassen des fettes aus dem Wasser, Verunreinigungen und Fett enthaltenden Gemisch und dadurch zum Trennen von Wasser und Verunreinigungen und schliesslich zum Schmelzen des erstarrten Fettes besitzt. Schliesslich ist es zweckmässig, wenn die Anlage einen zum Trocknen der granulierten eiweisshaltigen feuchten Festphase dienenden Apparat besitzt.

Die Erfindung wird im weiteren anhand der beigelegten Zeichnungen ausführlich beschrieben, die ein vorteilhaftes Ausführungsbeispiel und einige konstruktionsmässige Detaillösungen der Anlage enthalten. In den Zeichnungen zeigen

Fig. 1      die skizzierte Seitenansicht der Anlage,

Fig. 2      die in Fig. 1 mit A bezeichnete Einzelheit in einem grösseren Massstab,

Fig. 3      eine vorteilhafte Ausführungsform des Expansionsventils in einem noch grösseren Massstab und

Fig. 4      eine andere von der Fig. 1 abweichende Baugruppen enthaltende Einzelheit der Anlage.

In einen unten kegeligen Behälter 1 der Anlage mündet von oben eine Leitung 15, die zur Zuleitung der Schlamm- bzw. Schaumphase dient. Aus dem unteren Teil des Behälters 1 tritt eine, eine Pumpe 2 enthaltende Leitung 16 aus, an die einerseits eine in den oberen Teil des Behälters 1 mündende Rücklauf-/Rezirkulationsleitung 17, andererseits die Leitung 18 angeschlossen ist. In die Leitung 17 ist der Wärmetauscher 3, in die Leitung 18 der Wärmetauscher 4 eingebaut. Zwischen der Abzweigstelle E und den Wärmetauschern 3,4 sind Sperrarmaturen 17a bzw. 18a eingebaut.

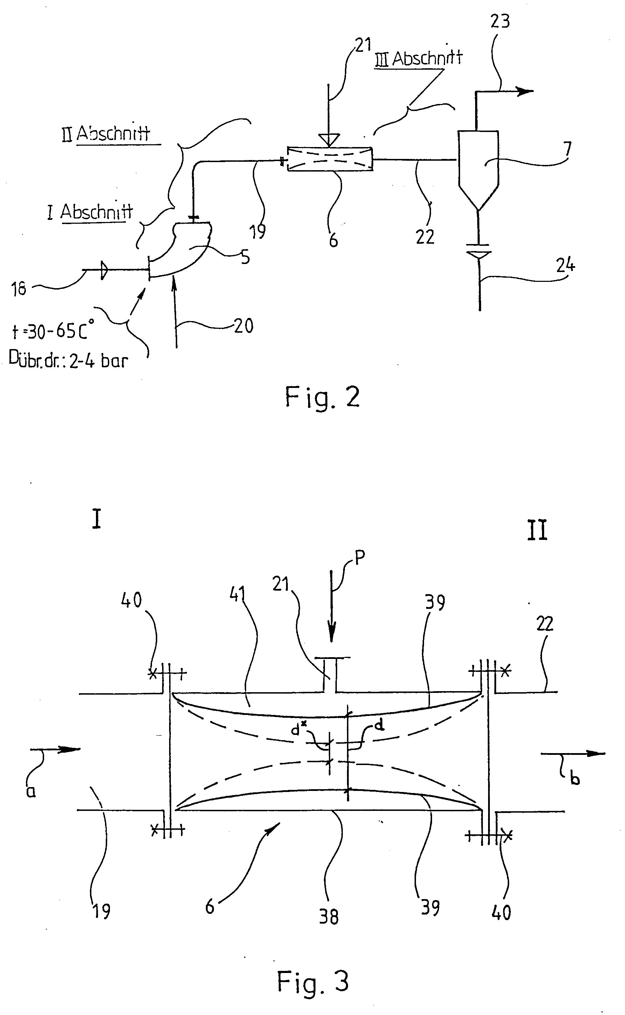

Die Leitung 18 mündet in eine Erwärmungseinheit 5, an die auch eine Dampfleitung 20 angeschlossen ist. Die aus der Erwärmungseinheit 5 austretende Leitung 19 versieht - wie das später noch zu sehen sein wird - eine Warmhaltefunktion. An ihrem Ende ist ein Expansionsventil 6 eingebaut, in das eine Pressluftleitung 21 mündet. Eine vom Expansionsventil 6 ausgehende Leitung 22 mündet in den oberen Teil eines unten kegeligen Trennbehälters 7, aus dessen unterem Teil eine Leitung 24 und aus dessen oberem Teil eine Leitung 23 austritt (siehe auch Fig. 2). Erstere mündet in einen durch eine Schneckenzentrifuge gebildeten Dekanteur 8, letztere in einen mit einem Ventilator 10 in Verbindung stehenden Wärmetauscher 11.

Es ist hier zu bemerken, dass die auf die bisher genannten und auf die im weiteren zur Beschreibung gelangenden Leitungen gezeichneten Pfeile die Richtung der Mediumströmung veranschaulichen.

5

Aus dem Dekanteur 8 treten drei Leitungen aus. Die eine Pumpe 9 enthaltende Leitung 27 mündet in den in die Leitung 18 eingeschalteten Wärmetauscher 4. Die zweite Leitung 26 ist an einen ersten Separator 14a, die dritte Leitung 25 an einen auch mit einer Absackvorrichtung 13 versehenen Trockner 12 angeschlossen (zweckmässig ist einen Kontakt-Fluid-Trockner zu verwenden, der aus der HU-A 184 674 erkenntlich ist). Eine von dem Wärmetauscher 11 ausgehende Leitung 28 sowie eine Dampfleitung 30 münden von oben in den Trockner 12. Eine aus diesem austretende Luftleitung ist mit der Bezugsnummer 29 bezeichnet - Der erste Separator 14a steht über eine Leitung 32 mit einem zweiten Separator 14b in Verbindung. Eine aus dem ersten Separator 14a austretende Leitung 33 dient zur Leitung der abgetrennten Wasserphase, eine Leitung 36 zur Ableitung der Schlammphase. Durch eine Leitung 32 gelangt das noch nicht reine Fett in den zweiten Separator 14b, aus dem Leitungen 34, 35 und 37 austreten. Die erste (34) ist zur Ableitung von Wasser, die zweite (35) zur Ableitung reinen Fettes und die dritte (37) zur Ableitung von Schlamm vorgesehen. Die Leitungen 36 und 37 sind an die Leitung 31 angeschlossen, die im oberen Teil des Behälters 1 mündet (die genannten Separatoren sind an sich bekannte Apparate mit Selbstentleerung).

Die bereits früher erwähnte Erwärmereinheit 5 (Momentanerhitzer) ist im Falle dieses Ausführungsbeispiels ein injektorartiger Apparat von besonderer Ausführung. Er besitzt keine einander folgende sich verengende (gerade) sondern sich erweiternde Abschnitte. Der Schlamm strömt nicht mit einer gradlinigen Strömung, sondern nach dem Eintritt mit einer 90-grad Richtungsabweichung. Der Dampf tritt nicht durch die in dem Strömungsraum angeordnete Düse in den Schlamm (wie dies bei den bekannten Injektoren üblich ist), sondern über die an den äusseren 90-grad Bogen angeschlossene, einen geringen Querschnitt aufweisende Dampfleitung 20 (zweckmässig wird mehr als eine Leitung vorgesehen), deren Einmündungsöffnung(en) in der äusseren Ebene der Apparatewand am 90-grad Bogen vorgesehen ist. D.h. die Dampfleitungen 20 reichen nicht in die strömende Flüssigkeit hinein. Die Abmessungen (Durchmesser, Rohrlänge) der Dampfleitungen 20 (Dampfeintrittsrohre) sind so auszuwählen, dass nach Abstellen der Wärmebehandlung (siehe später) die in den Dampfleitungen 20 unter Einwirkung des momentanen Vakuums zurückströmenden Schlammfeststoffteilchen keine Verstopfung verursachen und so der Vorgang ohne eine eigens vorzunehmende Reinigung erneut eingesetzt werden kann. Die Erhitzereinheit 5 ist weiterhin - um Ablagerungen zu vermeiden - so ausgebildet, dass darin keine toten Räume und die Strömung hindernde Teile vorzufinden sind.

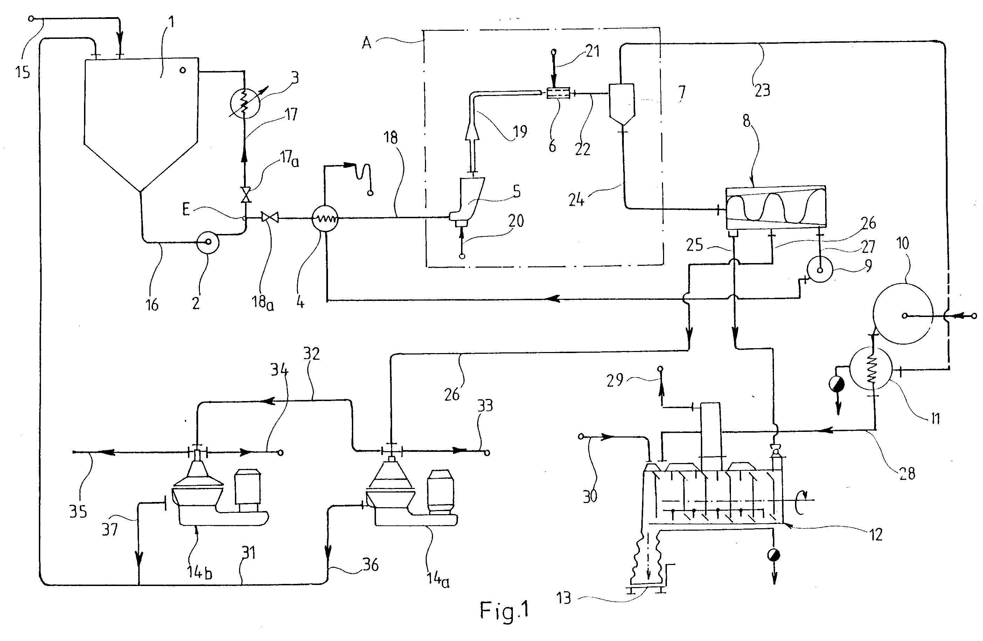

Eine vorteilhafte Ausführungsform des in Fig. 1 und Fig. 2 dargestellten Expansionsventils 6 ist in einem grösseren Masstab in Fig. 3 zu sehen. Es handelt sich dabei um eine die Strömung regelnde und den Druck mindernde Ausrüstung, in der kein Ventil sitzt und kein Ventilteller vorzufinden ist, sodaß das Strömungsmedium ohne Richtungsablenkung gradlinig weiterströmt, in der Armatur keine die Strömung störenden Elemente und tote Räume vorzufinden sind. Wie dies aus den Fig. 1-3 gut zu ersehen ist, ist das Expansionsventil 6 zwischen die Leitungen 19 und und 22 eingebaut und (wie aus Fig. 3 ersichtlich) besteht aus einem starren Rohrstück 38 sowie einem darin befestigten elastischen Rohrstück 39, mit dessen Hilfe die Strömung des Schlammes leicht und einfach geregelt werden kann. Flansche des elastischen Rohrstükkes 39 sind an den Enden zwischen Flanschen des starren Rohrstückes und Flanschen der sich anschliessenden Leitungen 19 und 22 mit Hilfe von Schrauben 40 eingespannt. Die Pressluftleitung 21 mündet in den zwischen dem starren Rohrstück 38 und dem elastischen Rohrstück 39 befindlichen Raum 41. In der Fig.3 wurde mit einer unterbrochenen Linie und dem Verhältnis $d^x < d$ veranschaulicht, daß unter Einwirkung der durch die Pressluftleitung 21 zugeführten Druckluft sich der innere Querschnitt (die lichte Weite) des elastischen Rohrstückes 39 vermindert und somit in dem aus der Richtung des Pfeiles $a$ eintretenden Medium infolge der Drosselung der Druck abfällt Die Richtung der Weiterströmung des Mediums wird durch den Pfeil $b$ veranschaulicht. Zufolge der vorstehend beschriebenen Ausgestaltung (Konstruktion) des Expansionsventils 6 können die im Schlamm befindlichen koagulierten Teilchen das Ventil nicht verschiessen und der Druck kann einfach durch Aenderung des Pressluftdruckes geregelt werden.

Der Druck der Pressluft muss den in der Warmhalteleitung 19 vorherrschenden überdruck von 2-4 bar um etwa 0,2 - 0,3 bar überschreiten, d.h. dass im Ventil ein überdruck von 2,2, bzw. 2,3-4,2 bzw. 4,3 bar vorrherrschen wird.

In der Leitung 19 (Fig. 1 und 2) dürfen keine Ablagerung herbeiführende tote Räume vorkommen.

Der obere Teil des sich an das Expansionsventil 6 mit einer kurzen Leitung 22 anschliessenden Trennbehälters 7 ist zylinderförmig, der untere Teil hingegen kegelig. Die zur Zuleitung des vierphasigen Schlammes dienende Leitung 22 mündet im oberen Drittel des zylindrischen Teiles tangential ein. Die Leitung 23 dient zur Ableitung des im Trennbehälter freiwerdenden Dampfes, wogegen durch die Leitung 24 der dreiphasige Schlamm austritt. Die Abmessungen des Trennbehälters 7 und der Anschlussleitungen sind so auszuwählen, dass im Verlaufe des Betriebes kein Überdruck im Trennbehälter 7 entsteht.

Der Betrieb der Anlage gemäss Fig. 1-3 erfolgt in nachstehender Weise:

6

Durch die Leitung 15 wird die durch eine -nach dem Flotationsverfahren erfolgende-Behandlung des (auf Schlachthöfen zentral gesammelten) Schlammes oder/und Abwassers erhaltene, als auf der Oberfläche schwimmend erscheinende Schaumphase in den Behälter 1 geführt. Die Schaumphase ist inhomogen, da ihre Zusammensetzung und so auch ihre kennzeichnenden Parameter sich über die Zeit sowie auch von dem Anfallort des Industrieabwassers abhängig wesentlich verändern. Da diese Inhomogenität die Denaturierung und Sterilisierung ungünstig beeinflusst, muss der dreiphasige - Fett, Wasser sowie Feststoffe heterogener Zusammensetzung enthaltende - Schlammschaum homogenisiert werden und zwar auf die Weise, dass auch ein "Schaumbruch" eintritt, d.h. dass die Luft aus dem System ausströmt. Mit dem "Bruch" des Schaumes wird dann ein Schlammkonsistenz aufweisender dreiphasiger Stoff erhalten.

Die Homogenisierung wird so vorgenommen, dass man an der in Fig. 1 eingezeichneten Verzweigungsstelle E die mittels der Pumpe 2 in der Leitung 16 zum Strömen gebrachte Durchlassschlammmenge aufteilt und zwar so, dass durch die Leitung 17 etwa 70-90 % des Schlammes in den Behälter 1 zurückgeführt, umgewälzt und der kleinere Teil (30-10 %) durch die Leitung 18 in die Erhitzereinheit 5 geführt wird. Im Verlaufe der mit Rezirkulation erfolgenden Homogenisierung tritt auch der "Bruch" der Schaumphase ein.

Der Schlamm muss, um die Möglichkeit seiner weiteren Behandlung zu sichern, erwärmt werden, was mit dem in die Leitung 17 eingebauten Wärmetauscher 3 vorgenommen wird. Mit der hier vorgenommenen Erwärmung wird der Schlamm im Behälter 1 und in den Leitungen 16 und 17 auf einer Temperatur von 30-60°C, vorteilhafterweise auf etwa 40°C gehalten.

Die Temperatur des in die Erhitzereinheit 5 weiter zu leitenden Schlammes wird mit Hilfe des in die Leitung 18 eingebauten Wärmetauschers 4 auf 30-65°C, vorteilhafterweise auf etwa 60°C erhöht bzw. die Temperatur des durch die Leitung 18 eintreffenden Schlammes aufrecht erhalten. Im Falle des vorliegenden Ausführungsbeispiels wird das aus dem dreiphasigen Dekanteur 8 mit einer Temperatur von 70-90°C austretende Wasser mit Hilfe der Pumpe 9 durch die Leitung 27 geleitet. Das austretende Warmwasser wird, z.B. vor seinem Einlass in das Kanalisationsnetz, die Wärme nutzend abgekühlt.

Die den Schlamm bewegende Pumpe 2 ist eine nach dem Prinzip der Volumenverdrängung arbeitende Konstruktion, z.B. eine Schraubenpumpe. Die Wärmetauscher 3 und 4 müssen leicht zu reinigen sein. Zur Erfüllung dieser Bedingung sind die Plattenwärmeaustauscher am besten geeignet.

Wichtige Baugruppen der Anlage sind auch in Fig. 2 zu sehen. In die als ein spezialer Injektor ausgebildete Erhitzereinheit 5 tritt der Schlamm mit einer Temperatur von 30-65°C und unter einem überdruck von 2-4 bar ein, wo dann Abschnitt I der erfindungsgemässen Wärmebehandlung, d.h. die "Momentanerhitzung" erfolgt. Der überdruck von 2-4 bar wird mit Hilfe des Expansionsventils 6 eingestellt.

Der zur Wärmebehandlung eintreffende Schlamm ist dreiphasig. Seine Zusammensetzung bzw. seine kennzeichnenden technischen Daten sind folgende: der Schlamm besteht aus flüssigem Fett, gelöste Eiweissstoffe und gelöste organische Stoffe enthaltendem Warmwasser sowie aus Feststoffen heterogener Zusammensetzung, deren Hauptkomponenten die eiweisshaltigen schwebenden Feststoffe, die organischen schwebenden Feststoffe (z.B. Stroh) sowie die anorganischen schwebenden Feststoffe sind. Die Mikrobenzusammensetzung des eine Temperatur von 30-65°C aufweisenden Schlammes ist von gemischter Population (vegetative Zellen, Sporen); die Grössenordnung der lebenden Mikrobenkonzentration zu Beginn beträgt $N_0 = 10^8$ (Stück.ml$^{-1}$).

Die Wärmebehandlung des homogenisierten und angewärmten Schlammes ist darauf ausgerichtet, dass einerseits die festen schwebenden Teile heterogener Zusammensetzung vollständig, die im Wasser gelösten eiweisshaltigen Stoffe hingegen zumindest teilweise zu behandelbaren körnigen Feststoffen koagulieren, andererseits durch die Sterilisation der gesamten Masse des Durchlassschlammes die Zahl der Mikroben wesentlich zurückgeht und die vollständige Vernichtung der anwesenden patogenen Mikroben erreicht wird.

Im Abschnitt I der Wärmebehandlung wird dem in der Erhitzereinheit 5 strömenden, eine Temperatur von 30-65°C und einen Überdruck von 2-4 bar aufweisenden Schlamm gesättigter Dampf durch die Dampfleitung 20 - die in der Nähe der Eintrittsöffnung der Erhitzereinheit 5 in diese mündet - mit einem Überdruck von ebenfalls 2-4 bar und einer Temperatur von 130-151°C vorzugsweise von etwa 140°C zugeführt. Die Wärmezufuhr erfolgt demgemäss nicht durch eine Wand, sondern im Material selbst durch Kondensation des Dampfes ("innere Wärmezufuhr"). Infolge der teilweisen Kondensation des gesättigten Dampfes ("Momentanerhitzung" bzw. "Momentanwärmezufuhr") steigt die Schlammtemperatur innerhalb von 1-2 Sekunden auf 130-140°C. Die Strömungsgeschwindigkeit des Schlammes wird nämlich so eingestellt, dass er 1-2 Sekunden in der Erhitzungseinheit 5 verweilt. Die Dampfzufuhr kann demgemäss ununterbrochen erfolgen. Mit der Regelung der Schlammstromgeschwindigkeit kann erreicht werden, dass die Temperaturerhöhung im Einheitsschlammvolumen auf 130-150°C innerhalb von 1-2 Sekunden eintritt. Im Innenraum der Erhitzereinheit 5 wird der Überdruck von 2-4 bar mit Hilfe des Expansionsventils 6

7

aufrechterhalten. An dieser Stelle ist zu bemerken, dass in der Erhitzereinheit 5 mehr Dampf zugeleitet wird, als zur Erhöhung der Temperatur des Schlammes auf etwa 140 °C erforderlich ist. Der nicht kondensierte Zusatzdampf strömt in der Form von Dampfbläschen mit dem Schlamm weiter. Im Verlaufe der vorstehend beschriebenen Wärmebehandlung erfolgt im Schlamm die Koagulation der festen Phase.

In der Erhitzereinheit 5 entwickelt sich wegen der Anwesenheit der Dampfbläschen folgender vierphasiger Schlamm: Wasser, Fett, körniges Gut heterogener Zusammensetzung und Dampfbläschen.

Der Abschnitt II der Wärmebehandlung verläuft in der "Warmhalteleitung" 19 ab, wobei sich der Schlamm dort unter einem Überdruck von 2-4 bar und bei einer Temperatur von 130-150 °C über eine Zeitdauer von 60-300 Sekunden aufhält. Die Länge der Leitung 19 ist so auszuwählen, dass darin unter Berücksichtigung der Strömungsgeschwindigkeit des Schlammes die genannte Aufenthaltsdauer von 60-300 Sekunden gesichert ist. Im Ergebnis der Warmhaltung kommt die Koagulation zum Abschluss und auch die Sterilisation des Schlammes wird vollendet.

Im Ergebnis der im Abschnitt I und II durchgeführten Wärmebehandlung kommt es zur Koagulation eines Teiles der schwebenden Teilchen heterogener Zusammensetzung, sowie der Eiweiss enthaltenden Stoffe, wodurch diese ausfilterbar werden. Im Schlamm hingegen - da sich die Sterilisation auf die gesamte Masse des Schlammes ausweitet - kommt es zu einer wesentlichen Verminderung der Mikrobenzahl (die letzte Lebendmikrobenkonzentration des Schlammes geht auf den Wert $N = 10^2 - 10^3$ (Stück/ml$^{-1}$) zurück wobei sämtliche patogenen Mikroben vollständig vernichtet werden). Die Dampfbläschen sind auch weiterhin im Schlamm anwesend, sodass dieser vierphasig bleibt. Die Grösse der im Schlamm befindlichen koagulierten Feststoffkörnchen kann - im extremen Falle - auch dem Innendurchmesser der Warmhalteleitung 19 nahe kommen und die koagulierten Körnchen behalten auch nach der Sterilisation ihre ursprüngliche Form.

Der Abschnitt III der Wärmebehandlung, die adiabatische Expansion, erfolgt in der vom Expansionsventil 6 bis zum Trennbehälter 7 reichenden Leitung 22 und in dem Trennbehälter 7 selbst auf die Weise, dass bei Einströmen in den einen atmosphärischen Innendruck aufweisenden Trennbehälter 7 der Druck des unter einem Überdruck von 2-4 bar liegenden Schlammes auf einen überdruck von 0,01-0,02 bar und seine Temperatur auf etwa 93-103 °C im allgemeinen auf 100 °C zurückgeht. Die Expansion verläuft momentartig, innerhalb von 1-2 Sekunden. Der im Schlamm befindliche nicht kondensierte Dampf, sowie der unter Einwirkung des Druckrückganges freigewordene sogenannte Nachdampf wird durch die aus dem oberen Teil des Trennbehälters 7 ausgehende Leitung 23 in den Wärmetauscher 11 geführt, wo dann die durch den Ventilator 10 dem Trockner 12 zuzuführende Luft vorgewärmt wird.

Die vorstehend beschriebenen drei Abschnitte I-III der Wärmebehandlung werden stets in kontinuierlichem Betrieb vorgenommen.

Wie bereits erwähnt, geht unter Einwirkung der Wärmebehandlung die Bakterienzahl in wesentlichem Masse zurück, die patogenen Bakterien werden vollständig vernichtet. Es wurde durch Versuche und Prüfungen nachgewiesen, dass einzelne eiweisshaltige Stoffe aufgeschlossen werden und im Ergebnis das Protein zugänglich wird, wodurch der verdaubare Eiweissgehalt des nach der Wärmebehandlung erhaltenen Feststoffes zunimmt. Weiterhin wurde auch festgestellt, dass die Momentanerhitzung und Sterilisation des Schlammes das herausgewonnene industrielle Fett weder in physikalischem noch in chemischem Sinne verändert hat, d.h. keine Gütebeeinträchtigung verursacht. Das gleiche kann auch über die eine grundlegende Komponente des Fleischmehles, das Lisin gesagt werden. Dieses wird im Verlaufe der Wärmebehandlung nicht inaktiv. Der Lisingehalt der Feststoffe erfährt keine Beschädigung (die Wärmeempfindlichkeit des im Fleischmehl befindlichen Lisins ist auch übrigens nicht bedutend).

Zur Fig. 1 zurückkommend: Aus dem Trennbehälter 7 wird über die Leitung 24 der eine Mindesttemperatur von 90 °C aufweisende Schlamm in den Dekanteur 8 - im Falle des vorliegenden Ausführungsbeispiels in die selbstentleerende Dreiphasen-Schneckenzentrifuge - geleitet, wo der Schlamm in mindestens 90 °C warmes Wasser, warmes Fett sowie warmen feuchten Feststoff getrennt wird. Wie bereits früher erwähnt, wird das warme Wasser durch die Leitung 27 in den Wärmetauscher 4 geführt. Das warme Fett wird durch die Leitung 26 in den Separator 14a, der feuchte Feststoff hingegen über die Leitung 25 - zwecks Trocknens und Granulierens - in den Trockner 12 geleitet.

Das im Separator 14 eintreffende warme Fett enthält 20 % Wasser und 1 % feste Schmutzstoffe. Der Wert des gereinigten sogenannten industriellen Fettes wird im entscheidenden Masse dadurch beeinflusst, wie weit nach der Behandlung das Entfernen der verunreinigenden Stoffe vorgenommen werden kann. Nach unseren Untersuchungen kann in den mit zentrifugalen Kraftfeldern arbeitenden Abscheidern (zweckmässig in selbstentleerenden Tellerseparatoren) die Reinigung am effektivsten durchgeführt werden. Im Interesse der Erhöhung der Effektivität der Reinigung wird die Abscheidung in zwei Stufen vorgenommen: das aus dem Separator 14a austretende zum grössten Teil bereits gereinigte Fett wird durch die Leitung 32 in den mit ersterem in Reihe geschalteten zweiten Separator 14b geleitet, von wo dann über die Leitung 35 bereits das vollkommen gereinigte eine 30°C überschreitende Temperatur aufweisende flüssige Fett entnommen werden kann, was dann als Industrie fett zur weiteren Verwendung weiter versandt wird. Aus den Separatoren 14a und 14b mit einer Temperatur von mindestens 30°C austretendes warmes Wasser strömt durch die Leitungen 33 bzw. 34 zum Beispiel in das Kanalisationsnetz. Der aus der Kammer der Separatoren zeitweilig in geringen Mengen ausgestossene Schlamm gelangt durch die Leitungen 36, 37 in die Leitung 31 und wird durch diese in den Behälter 1 zurückbefördert.

Die Zusammensetzung des aus dem Dekanteur 8 kommenden feuchten Feststoffes ist heterogen: er enthält körnige, organische und anorganische sowie granulierte Feststoffkomponenten auf Proteinbasis, etwa 60 % Wasser, weiterhin etwa 13 % Fett. Im Trockner 12 - der wie bereits erwähnt ein in der HU-A 184 674 beschriebener sogenannter "Kontakt-Fluid"Trockner ist - wird der Feuchtigkeitsgehalt des Feststoffes auf etwa 7 % herabgesetzt. Parallel dazu kommt es zum Abschluss der Verkörnung des Feststoffes und einer weiteren Fortsetzung der Entkeimung. Das aus dem Trockner 12 in die Sackfüllvorrichtung 13 gelangende körnige Feststoffgut kann zufolge seines niedrigen Feuchtigkeits- und Fettgehaltes über eine längere Zeitdauer, sogar über Jahre gelagert werden. Da sein wertvoller Proteingehalt im Verlaufe der Behandlung keinen Schaden erleidet, kann es als Grundstoff für Fleischmehlfuttermittel praktisch unbegrenzt nutzbar gemacht werden.

Im vorstehenden wurde das Verfahren von der Voraussetzung ausgehend beschrieben, dass das in den Behälter 1 geführte und zu Verarbeitung gelangende Rohmaterial auf der flotierten Abwasseroberfläche schwimmender Schaum ist. Selbstverständlich sind aber die erfindungsgemässe Einrichtung und das zugehörige Verfahren nicht nur zur Behandlung derartiger Stoffe, sondern auch zur Verarbeitung von ungeschäumten fetthaltigem Abwasser geeignet. In den Behälter 1 kann das in den betrieblichen Fettfangschichten angesammelte und das mittels Saugwagen eingesammelte fetthaltige Abwasser (Schlamm) auch ohne Schäumen zugeführt werden, wobei jedoch die darin schwebenden groben mechanischen Verunreinigungen zum Beispiel mittels eines Siebes vorhergehend ausgefiltert werden müssen. Im Behälter 1 und durch die Leitungen 16, 17 wird der grössere Teil des Schlammes jedoch in diesem Falle mittels der aus Fig. 1 ersichtlichen Pumpe 2 umgewälzt und mit Hilfe des Wärmetauschers 3 auf der bereits genannten Temperatur von 30-60°C, vorteilhafterweise von etwa 40°C gehalten Die Behandlung des Schlammes (des Abwassers) erfolgt hiernach entsprechend der in Zusammenhang mit den Fig. 1-3 beschriebenen Behandlung.

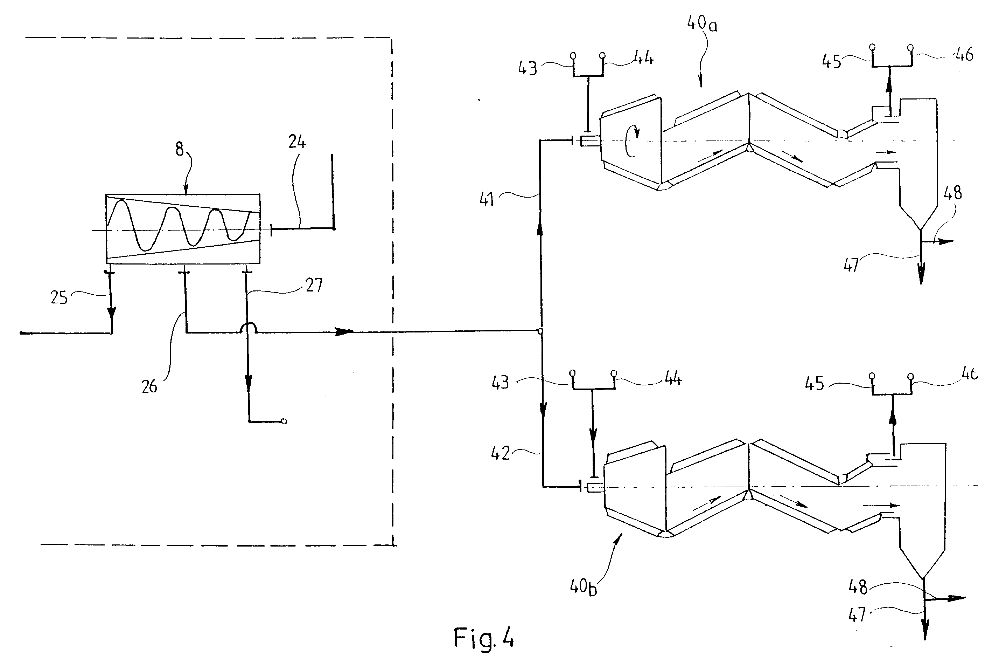

Die Herausgewinnung des Fettes kann auch ohne Verwendung der im Zusammenhang mit Fig. 1 beschriebenen Methoden und Apparate vorgenommen werden, d.h. dass nicht unbedingt die beschriebenen selbstentleerenden Tellerseparatoren eingesetzt werden müssen. Man kann auch so vorgehen, dass das aus dem in Fig. 1 dargestellten Dekanteur 8 austretende warme - z.B. eine Temperatur von etwa 90°C aufweisende - flüssige und noch zu reinigende Fett in mehreren Schritten in einem Apparat auf eine Temperatur von mindestens 10°C (oder noch darunter) abgekühlt wird, wobei das erstarrte Fett sich an der Wand des Apparates festsetzt, wogegen das darin befindliche Wasser mit den festen Schmutzkomponenten zusammen aus dem System austritt. Hiernach werden das erstarrte und an die Apparatewand angesetzte Fett auf eine Temperatur von mindestens 40°C erwärmt und das so erhaltene reine Industriefett auf seinen Bestimmungsort weitertransportiert. Für die beschriebenen kombinierten Erstarrungs- und Erwärmungsverfahren kommen verschiedene Apparate zum Einsatz. So kann z.B. in einem die Form eines senkrechten Rohres aufweisenden Apparat eine Fallfilm-Erstarrungs- und Erwärmung vorgenommen werden. Auch ein derartiges in seiner Lage beliebiges Rohr kann verwendet werden, indem zur Förderung der Stoffe und zur Bildung des Fettfilmes eine Förderschnecke eingebaut ist. Schliesslich kann am zweckmässigsten die Lösung nach Fig. 4 angewandt werden, in der die bereits früher beschriebenen Anlagenteile mit den bereits benutzten Bezugsnummern bezeichnet werden. Die Kühl- und Heizapparate 40a und 40b sind Gegenstand der HU-A- 184 672, weshalb hier auf eine ausführliche Beschreibung derselben verzichtet wird. Die Fig. 4 zeigt unter Verwendung der beiden Kühl- und Heizgeräte 40a, 40b eine mit kontinuierlichem Betrieb arbeitende Anlage. Wenn in dem Kühl- und Heizapparat 40a der Erstarrungs vorgangläuft (hierbei wird kaltes Nasser in das Gerät gelassen), erfolgt im Kühl- und Heizapparat 40b die Erwärmung. Danach werden die beiden Zyklen gewechselt. Auf diese Weise kann die Fettgewinnung kontinuierlich erfolgen. Besitzt die Anlage nur einen Kühl- und Heizapparat so kann der Betrieb nur periodisch erfolgen, da der Arbeitsgang des Erstarrens und Erwärmens in dem gleichen Apparat zyklisch abwechselnd erfolgt.

An die Kühl- und Heizapparate 40a, 40b der Anlage nach Fig. 4 ist übrigens je eine von der Leitung 26 (siehe auch Fig. 1) abgezweigte Leitung 41, 42 angeschlossen. Das zum Erstarren und das zum Schmelzen benutzte Wärme tragende Medium ist in einem doppelten Mantel geleitetes kaltes bzw. warmes Wasser. Zur Zuleitung des ersteren dient die Leitung 44, zur Zuleitung des letzteren, die Leitung 43. Aus den Kühl- und Heizapparaten 40a, 40b tritt das als Wärmeträgermedium funktionierende Warmwasser durch die Leitung 45, das Kaltwasser hingegen durch die Leitungen 46 aus. Aus dem erschmolzenen Fett wird das darin befindliche Wasser abgeschieden und tritt durch die Leitung 47 aus, wogegen das reine (industrielle Qualität aufweisende) Fett durch die Leitung 48 weggeleitet wird.

Die Erfindung wird im weiteren anhand von Beispielen ausführlich beschrieben.

Beispiel 1

Der in einem Schlachthof zentral gesammelte Schlamm und der im Verlaufe der Abwasserbehandlung entstandene Flotationsabwsseeschaum wird in einem einen schrägen Boden aufweisenden 10 m³-Speicherbehälter gesammelt. Die inhomogene Schlamm-Schaumphase wird mit der durch eine das Fassungsvermögen des Behälters mindestens dreifach überschreitende Förderleistung aufweisende Mischpumpe rezirkuliert (Umwätälzung) und so homogenisiert. Mit diesem Arbeitsgang wird zugleich auch die Schaumphase gebrochen.

Der homogenisierte fetthaltige Abwasserschlamm wird mittels einer Pumpe unter einem überdruck von 2,5 bar und mit einer Zuführgeschwindigkeit von 800 l/h in die injektorartig ausgebildete Erhitzereinheit gedrückt und hier unter kontinuierlicher Dampfzufuhr auf eine Temperatur von 130°C aufgeheizt. Das aus der Erhitzereinheit austretende mehrphasige Gut wird über eine Zeitdauer von 180 Sekunden unter diesem überdruck und bei dieser Temperatur gehalten, wobei im wärmeisolierten (wärmehaltenden) Leitungsabschnitt das Gut kontinuierlich bis zum Expansionsventil strömen gelassen wird. Im Ergebnis dieser Wärmebehandlung kommt es einerseits zur Koagulation eines Teiles der schwebenden Komponenten heterogener Zusammensetzung, sowie der proteinhaltigen Stoffe, die so ausfilterbar werden, andererseits wird die ganze Masse des Schlammes sterilisiert, sodaß die Zahl der Mikroben wesentlich zurückgeht und darin die patogenen Mikroben vollständig vernichtet werden.

Der wärmebehandelte Sclamm gelangt durch das genannte mit einem äusseren überdruck von 4 bar belastete Expansionsventil strömend in einen unter atmosphärischem Druck stehenden, ein Fassungsvermögen von 200 Liter aufweisenden und einen Mischer enthaltenden Trennbehälter. Hier erfolgt die adiabatische Expansion des Schlammes. Der im Verlaufe dieser Expansion freiwerdende Dampf tritt aus dem Behälter durch dessen oberen Teil aus. Der heisse, eine Temperatur von ca. 100°C aufweisende Schlamm wird in eine Schneckenzentrifuge mit Selbstentleerung geleitet. Aus dem in einer Menge von ca. 1000 l/h eintreffenden heissen Schlamm werden in einer Menge von 150-200 l/h fetthaltiges an der Oberfläche schwimmendes Gut sowie in einer Menge von 30-50 kg/h feuchte Feststoffphase gewonnen. Aus letzterer können in einer Trockenanlage Fleischmehl in einer Menge von 15-20 kg/h hergestellt, aus der fetthaltigen auf der Oberfläche schwimmenden Phase hingegen mit Hilfe von Separatoren in einem zweistufigen System Industriefett in einer Menge von 80-100 kg/h gewonnen werden.

Beispiel 2

Das in den betrieblichen Fettfängerschächten angesammelte fetthaltige Abwasser wird mit Saugwagen gesammelt und das von den groben Verunreinigungen mittels einer vorhergehenden Filterung befreite Gut in einen 10 m³ Speicherbehälter geleitet. Das durch die Zirkulation (Umwälzung) mit Hilfe einer Abwasser-Misch- und Desintegratorpumpe homogenisierte Gut - zu der Zeit bereits dünn flüssiger Schlamm - wird mit dem in Beispiel 1 beschriebenen überdruck und der dort beschriebenen Zuführgeschwindigkeit in eine Momenterhitzereinheit geführt, wo es dann durch die Einführung von gesättigtem Dampf in kontinuierlichem Betrieb auf eine Temperatur von 130°C angeheizt wird. Das aus dem Momenterhitzer austretende mehrphasige Gut wird über eine Zeitdauer von 180 Sekunden unter diesem Druck und auf dieser Temperatur gehalten. Im Ergebnis der Wärmebehandlung wird auch in diesem Falle ein Teil der schwebenden Komponenten ausfilterbar. Die eiweisshaltigen Stoffe koagulieren und werden ebenfalls ausfilterbar. Die ganze Menge des Schlammes (Durchlassschlammes) wird sterilisiert, wobei die Zahl der Mikroben zurückgeht und die patogenen Mikroben vollständig zerstört werden.

Der wärmebehandelte und durch das Expansionsventil durchströmende Schlamm wird tangential in einen Trennbehälter mit einem Fassungsvermögen von 30 Liter geleitet, wo der überdruck von 2,5 bar - mit der adiabatischen Expansion - auf den atmosphärischen Druck zurückgeht und die Temperatur hingegen ca. 100°C wird. Der freiwerdende Dampf tritt aus dem oberen Teil des Behälters aus.

Der aus dem Trennbehälter austretende dreiphasige Schlamm, der aus Fett, Wasser und körnigen Feststoffen besteht, wird mittels eines dreiphasigen Schneckendekanteurs getrennt. Das von dem sich absetzenden Material freie Blut kann sofort kanalysiert werden (ca. 600 l/h). Die feuchte Festphase (max. 50 kg/h) kann zwischen die sonstigen Schlachthofabfälle gemischt werden. Die mengenmässig ca. 350 l/h ausmachende fetthaltige Phase gelangt nach der zweistufigen mit Heisswasser in Separatoren erfolgenden Reinigung und Verwaage (in einer Menge von 150-200 l/h) in Industriefett-Lagerbehälter.

Die mit der Erfindung verbundenen vorteilhaften Auswirkungen sind folgende:

Die Erfindung ermöglicht die Behandlung der Schlachthofabwässer und deren Aufarbeitung zu industriellem Fett sowie zu Futterproteinen zur Fütterung von Tieren. Mit Hilfe des Verfahrens und der zugehörigen Anlage wird demgemäss nicht nur das Schlachthofabwasser als umweltverunreinigender Faktor unschädlich gemacht, sondern aus dem Abwasser werden auch gut nutzbare wertvolle Stoffe herausgewonnen, wodurch der Arbeitsgang der Abwasserbehandlung auf die Weise wirtschaftlich gemacht werden kann, dass dabei keine chemische Behandlung erforderlich wird. Auch die mit der weiteren Behandlung der Schaumphase verbundenen technischen und wirtschaftlichen Probleme können auf diese Weise gelöst werden.

**Patentansprüche**

1. Verfahren zur Gewinnung von Fett und/oder eiweißhaltigem breiigem Material aus fetthaltigem und eiweißhaltigem flüssigem Stoff, insbesondere Schlachthofschlamm und/oder - Abwasser, umfassend die Schritte:
   - der flüssige Stoff wird homogenisiert und auf eine Temperatur von 30-60° erwärmt;
   - der angewärmte flüssige Stoff strömt in eine Erhitzereinheit, wodurch direkte Einführung von eine Temperatur von 130-151°C und einen Überdruck von 2-4 bar aufweisenden Dampf der flüssige Stoff unter einen Überdruck von 2-4 gesetzt und innerhalb einer Zeitdauer von 1-2 Sekunden auf eine Temperatur von 130-150° erhitzt wird, was im flüssigen Stoff eine Körnchenbildung auslöst;
   - der flüssige Stoff mit der erhöhten Temperatur wird - unter Aufrechterhaltung seines Überdruckes und seiner Temperatur - über eine Zeitdauer von ca. 60-300 Sekunden weiter strömen gelassen;
   - hiernach wird der flüssige Stoff durch Verminderung seines Überdruckes auf etwa 0,01 - 0,02 bar während einer Zeitdauer von 1-2 Sekunden adiabatisch expandiert;
   - der expandierte flüssige Stoff wird in Wasser, Wasser- und Feststoffverunreinigungen enthaltendes Fett sowie in eiweißhaltige feuchte Festphase getrennt.

2. Verfahren nach Anspruch 1,
   **dadurch gekennzeichnet,**
   daß aus dem Wasser und Feststoffverunreinigungen enthaltenden Fett mit einem oder mehreren Trennarbeitsgängen industrielle Qualität aufweisendes Fett hergestellt wird.

3. Verfahren nach Anspruch 1 oder 2,
   **dadurch gekennzeichnet,**
   daß aus dem feuchten Feststoff durch dessen Trocknen und Granulieren in Säcke abfüllbares eiweißhaltiges Futtermittel hergestellt wird.

4. Verfahren nach einem der Ansprüche 1-3,
   **dadurch gekennzeichnet,**
   daß der zu behandelnde Ausgangsstoff aus durch Flotieren auf der Abwasseroberfläche schwimmend erhaltenem Schaum gebildeter Schlamm ist.

5. Verfahren nach Anspruch 4,
   **dadurch gekennzeichnet,**
   daß der Schaum durch eine auch die Homogenisierung bewirkende Umwälzung zu Schlamm umgewandelt wird.

6. Vorrichtung zur Durchführung des Verfahrens nach Anspruch 1, die Mittel zum Umwälzen und Aufwärmen des flüssigen Stoffes sowie eine Leitung (18) zur Weiterleitung des erwärmten flüssigen Stoffes besitzt, die an eine druckfeste Erhitzereinheit (5) angeschlossen ist, in die eine Dampfleitung (20) mündet, wobei aus der Erhitzereinheit (5) eine Leitung (19) austritt, in die ein Expansionsventil (6) eingebaut ist, an das eine in einen Trennbehälter (7) zum Abtrennen des Dampfes mündende Leitung (22) angeschlossen ist und wobei die Anlage eine Apparatur zum Trennen des aus dem Trennbehälter (7) austretenden flüssigen Stoffes in wässrige, Fett- und Festphase besitzt.

7. Vorrichtung nach Anspruch 6,
   **dadurch gekennzeichnet,**
   daß sie einen Behälter (1) zur Aufnahme und Homogenisierung des unbehandelten flüssigen Stoffes besitzt, an den mindestens eine die Pumpe (2) und den Wärmetauscher (3) enthaltende Rezirkulationsleitung (16, 17) angeschlossen ist, wobei die in die Erhitzereinheit (5) mündende Leitung (18) von der Rezirkulationsleitung (17) ausgeht und ein Wärmetauscher (4) an sie angeschlossen ist.

8. Vorrichtung nach Anspruch 6 oder 7,
**dadurch gekennzeichnet,**
daß die Erhitzereinheit (5) ein, eine Richtungsablenkung sicherndes injektorartiges, im Mittelteil durch bogenförmige Flächen begrenztes und in Richtung der Strömung sich erweiterndes Bauteil ist, in das nahe seiner Eintrittsöffnung eine oder mehrere Dampfleitungen (20) einmünden, wobei die Einmündung der letzteren in der Ebene der Wand der Erhitzereinheit (5) liegt.

9. Vorrichtung nach einem der Ansprüche 6-8,
**dadurch gekennzeichnet,**
daß das Expansionsventil (6) ein starres Rohrstück (38) und ein darin angeordnetes elastisches Rohrstück (39) ist, und daß in den Raum (41) zwischen dem starren Rohrstück (38) und dem elastischen Rohrstück (39) eine Preßluftleitung (21) mündet.

10. Vorrichtung nach einem der Ansprüche 6-9,
**dadurch gekennzeichnet,**
daß der Trennbehälter (7) oben mit einem zylindrischen und unten mit einem kegeligen Teil ausgerüstet ist, wobei aus seinem oberen Teil die zur Weiterleitung des Dampfes und aus seinem unteren Teil die zur Weiterleitung des flüssigen Stoffes dienenden Leitungen (23, 24) ausgehen.

11. Vorrichtung nach einem der Ansprüche 1-10,
**dadurch gekennzeichnet,**
daß der Apparat zum Trennen des aus dem Trennbehälter (7) austretenden flüssigen Stoffes in wässrige, Fett- und breiige Phase eine Schneckenzentrifuge mit Selbstentleerung ist.

12. Vorrichtung nach einem der Ansprüche 6-11,
**dadurch gekennzeichnet,**
daß sie mindestens einen Separator ( 14a, 14b )zum Abscheiden des Wassers und der Verunreinigungen aus der Wasser- und Feststoffverunreinigungen enthaltenden Fettphase besitzt.

13. Vorrichtung nach einem der Ansprüche 6-11,
**dadurch gekennzeichnet,**
daß sie mindestens einen Apparat zum Erstarren oder Gefrieren des Fettes aus dem Wasser und dem Verunreinigungen und Fett enthaltenden Gemisch und hiermit zur Abscheidung von Wasser und den Verunreinigungen sowie zum Erschmelzen des erstarrten Fettes besitzt.

14. Vorrichtung nach einem der Ansprüche 6-13,
**dadurch gekennzeichnet,**
daß sie einen zum Trocknen des körnigen eiweißhaltigen feuchten Feststoffes dienenden Apparat besitzt.

## Claims

1. Process for obtaining fat and/or protein-containing pulpy material from fat-containing and protein-containing liquid material, in particular abattoir slurry and/or waste, comprising the steps :
   - the liquid material is homogenized and heated to a temperature of 30-60° ;
   - the heated liquid material flows into a heater unit where through direct introduction of steam having a temperature of 130-151 °C and an excess pressure of 2-4 bars the liquid material is subjected to an excess pressure of 2-4 bars and is heated to a temperature of 130-150° within a period of 1-2 seconds, which initiates a formation of granules in the liquid material;
   - whilst maintaining its excess pressure and its temperature the liquid material at the elevated temperature is allowed to flow further for a period of approx. 60-300 seconds;
   - hereafter, the liquid material is adiabatically expanded for a period of 1-2 seconds by reducing its excess pressure to approx. 0.01-0.02 bars;

12

-   the expanded liquid material is separated into water, fat containing water and solid impurities and into protein-containing moist solid phase.

2.  Process according to Claim 1, characterized in that fat having industrial quality is produced from the fat containing water and solid impurities with one or more separation cycles.

3.  Process according to Claim 1 or 2, characterized in that protein-containing feed which can be bagged is produced from the moist solid by drying and granulating it.

4.  Process according to one of Claims 1-3, characterized in that the starting material to be treated is slurry formed from foam obtained floating on the waste surface by flotation.

5.  Process according to Claim 4, characterized in that the foam is converted to slurry by means of a circulation which also brings about the homogenization.

6.  Device for implementing the process according to Claim 1, which possesses means for circulating and heating the liquid material and a line (18) for conveying the heated liquid material further, which is connected to a pressure-resistant heater unit (5) into which a steam line (20) opens, a line (19) leaving the heater unit (5) in which line an expansion valve (6) is installed, to which a line (22) opening into a separating container (7) to separate the steam is connected and the installation possessing an apparatus for separating the liquid material leaving the separating container (7) into aqueous, fat and solid phase.

7.  Device according to Claim 6, characterized in that it possesses a container (1) for receiving and homogenizing the untreated liquid material, to which at least one recirculation line (16, 17) containing the pump (2) and the heat exchanger (3) is connected, the line (18) opening into the heater unit (5) starting from the recirculation line (17) and a heat exchanger (4) being connected to it.

8.  Device according to Claim 6 or 7, characterized in that the heater unit (5) is an injector-like component which ensures a deflection of direction, is limited in the central section by arc-shaped surfaces and enlarges in the direction of the flow, into which one or more steam lines (20) open adjacent to its inlet opening, the opening of the latter lines lying in the plane of the wall of the heater unit (5).

9.  Device according to one of Claims 6-8, characterized in that the expansion valve (6) is a rigid pipe piece (38) and a flexible pipe piece (39) arranged therein, and that a compressed air line (21) opens into the chamber (47) between the rigid pipe piece (38) and the flexible pipe piece (39).

10. Device according to one of Claims 6-9, characterized in that the separating container (7) is equipped with a cylindrical part at the top and a conical part at the bottom, the lines (23, 24) serving to convey the steam and to convey the liquid material starting from its top part and its bottom part respectively.

11. Device according to one of Claims 1-10, characterized in that the apparatus for separating the liquid material leaving the separating container (7) into aqueous, fat and pulpy phase is a worm centrifuge with self-discharge.

12. Device according to one of Claims 6-11, characterized in that it possesses at least one separator (14a, 14b) for separating the water and the impurities from the fat phase containing water and solid impurities.

13. Device according to one of Claims 6-11, characterized in that it possesses at least one apparatus for solidifying or freezing the fat from the water and the mixture containing fat and impurities and with this for separating water and the impurities as well as for melting the solidified fat.

14. Device according to one of Claims 6-13, characterized in that it possesses an apparatus serving to dry the granular protein-containing moist solid.

**Revendications**

1. Procédé de récupération de matières pâteuses contenant des graisses et/ou des protéines à partir d'un produit liquide graisseux, particulièrement à partir de boues et/ou d'eaux usées d'abattoirs, comprenant les phases suivantes :
   - la matière liquide est homogénéisée et portée à une température de 30 à 60°;
   - la matière liquide réchauffée passe dans une unité de réchauffement où ladite matière liquide est soumise à une surpression de 2 à 4 bars par introduction directe de vapeur présentant une température de 130 à 151°C et une surpression de 2 à 4 bars et portée en 1 à 2 secondes à une température de 130 à 150°C, ce qui déclenche une granulation dans la matière liquide;
   - la matière liquide à la température accrue continue de circuler pendant environ 60 à 300 secondes - avec conservation de sa surpression et de sa température;
   - ensuite, la matière liquide est détendue de manière adiabatique par la réduction de sa surpression à environ 0,01 à 0,02 bar pendant un intervalle de temps de 1 à 2 secondes;
   - la matière liquide détendue dissociée en eau, graisse contenant des impuretés aqueuses et solides ainsi qu'en une phase solide humide contenant des protéines.

2. Procédé selon la revendication 1, caractérisé en ce qu'une graisse de qualité industrielle est réalisée en une ou plusieurs opérations de séparation à partir de la graisse contenant de l'eau et des impuretés solides.

3. Procédé selon l'une des revendications 1 ou 2, caractérisé en ce que des aliments pour animaux contenant des protéines ensachables sont réalisés à partir de la matière solide humide par séchage et granulation de celle-ci.

4. Procédé selon l'une des revendications 1 à 3, caractérisé en ce que la matière de départ à traiter est une mousse flottant à la surface des eaux usées et obtenue par flottation.

5. Procédé selon la revendication 4, caractérisé en ce que la mousse est transformée en boue par une circulation qui provoque également l'homogénéisation.

6. Dispositif pour la mise en oeuvre du procédé selon la revendication 1, qui comprend des moyens pour la mise en circulation et le réchauffement de la matière liquide ainsi qu'une conduite (18) pour l'acheminement de la matière liquide réchauffée raccordée à une unité de réchauffement (5) résistant à la pression dans laquelle débouche une conduite de vapeur (20), de l'unité de réchauffement (5) partant une conduite (19) dans laquelle est intégrée une soupape de détente (6) à laquelle est raccordée une conduite (22) qui débouche dans un réservoir séparateur (7) pour la séparation de la vapeur, et l'installation comprenant un appareillage pour dissocier la matière liquide sortant du réservoir séparateur (7) en une phase aqueuse, une phase graisseuse et une phase solide.

7. Dispositif selon la revendication 6, caractérisé en ce qu'il comprend un réservoir (1) pour la réception et l'homogénéisation de la matière liquide non traitée, auquel est raccordée au moins une conduite de recirculation (16, 17) équipée de la pompe (2) et de l'échangeur de chaleur (3), la conduite (18) débouchant dans l'unité de réchauffement (5) partant de la conduite de recirculation (17) et étant munie d'un échangeur de chaleur (4).

8. Dispositif selon l'une des revendications 6 ou 7, caractérisé en ce que l'unité de réchauffement (5) est un élément de type injecteur qui assure une déviation, dont la partie médiane est délimitée par des surfaces arquées et qui s'élargit dans la direction d'écoulement, et dans lequel débouchent, à proximité de son ouverture d'entrée, une ou plusieurs conduites de vapeur (20), l'embouchure de ces dernières se situant dans le plan de la paroi de l'unité de réchauffement (5).

9. Dispositif selon l'une des revendications 6 à 8, caractérisé en ce que la soupape de détente (6) est un tronçon de tube rigide (38) dans lequel est inséré un tronçon de tube élastique (39), et que dans l'espace (41) entre le tronçon de tube rigide (38) et le tronçon de tube élastique (39) débouche une conduite d'air comprimé (21).

14

**10.** Dispositif selon l'une des revendications 6 à 9, caractérisé en ce que le réservoir séparateur (7) comporte en haut une partie de forme cylindrique et en bas, une partie de forme conique, les conduites (23, 24) partant de sa partie supérieure pour l'acheminement de la vapeur, et de sa partie inférieure, pour l'acheminement de la matière liquide.

**11.** Dispositif selon l'une des revendications 1 à 10, caractérisé en ce que l'appareil pour la dissociation de la matière liquide sortant du réservoir séparateur (7) en une phase aqueuse, une phase graisseuse et une phase solide, est une centrifugeuse à vis avec évacuation automatique.

**12.** Dispositif selon l'une des revendications 6 à 11, caractérisé en ce qu'il comprend au moins un séparateur (14a, 14b) pour séparer l'eau et les impuretés de la phase graisseuse contenant des impuretés aqueuses et solides.

**13.** Dispositif selon l'une des revendications 6 à 11, caractérisé en ce qu'il comprend au moins un appareil pour la solidification ou la congélation de la graisse contenue dans l'eau et dans le mélange chargé d'impuretés et de graisse, et donc pour l'élimination de l'eau et des impuretés ainsi que pour la fusion de la graisse solidifiée.

**14.** Dispositif selon l'une des revendications 6 à 13, caractérisé en ce qu'il comprend un appareil pour le séchage des matières solides humides granulées contenant des protéines.

Fig.1

II Abschnitt

I Abschnitt

III Abschnitt

t =30-65 C°

Dübr.dr.: 2-4 bar

Fig. 2

I

II

P

Fig. 3

Fig. 4